# EUROPEAN PATENT APPLICATION

(11) **EP 3 258 729 A1**
(43) Date of publication of application: **20.12.2017**
(21) Application number: 16749061.4
(22) Date of filing: 29.01.2016
(51) Int. Cl.: H04W 72/04, H04W 16/28

(54) **COMMUNICATION APPARATUS**

(30) Priority: 09.02.2015 JP 2015023470
(71) Applicant: Mitsubishi Electric Corporation, Chiyoda-ku Tokyo 100-8310 (JP)
(72) Inventor: FUKUI, Noriyuki, Tokyo 100-8310 (JP); NAKAZAWA, Masayuki, Tokyo 100-8310 (JP)
(74) Representative: Pfenning, Meinig & Partner mbB
(86) International application number: PCT/JP2016/052705
(87) International publication number: WO 2016/129417

(57) **Abstract**

A base station 1 being a communication device that transmits a signal by using beamforming includes: a modulator-demodulator 13 that generates data signals by individually encoding and modulating one or more pieces of data, and generates control signals by individually encoding and modulating control information that is equal in number to the one or more pieces of data and is used in reception processing of the data signals; an RS generation unit 14 that generates reference signals that are each specific to a corresponding destination and are used in estimating a radio channel for the reception processing of the data signals and the control signals; and a transceiver 15 that arranges the data signals in a data channel, arranges the control signals and the reference signals in a control channel in a way that signals having the same destination are arranged in the same region, and then transmits the signals.

## Description

### Field

The present invention relates to a communication device that transmits and receives signals by using beamforming.

### Background

With long term evolution (LTE) becoming popular around the world today, a base station and a terminal supporting LTE perform communication by using a physical dedicated control channel (PDCCH) and a physical dedicated shared channel (PDSCH). The PDSCH is a data channel that transmits data in a downlink directed from the base station to the terminal. The PDCCH is a control channel that transmits control information configured to include various pieces of information required to demodulate and decode the PDSCH. The control information transmitted through the PDCCH is configured to include information such as a position in the frequency domain of the PDSCH as well as a modulation scheme and a spatial multiplexing number thereof.

A subframe used in LTE is configured to include a PDCCH region and a PDSCH region in the frequency and time domains. The PDCCH being the control channel is allocated to the PDCCH region, and the PDSCH being the data channel is allocated to the PDSCH region. The PDCCH and PDSCH transmitted to a certain terminal are allocated to parts of the corresponding PDCCH and PDSCH regions, respectively. The terminal first detects the PDCCH addressed to itself in order to receive the PDSCH. Although limited, many positions and bit sizes of the PDCCH are available as candidates for every terminal. A 3GPP Release 9 standard has 22 candidates, for example. The terminal demodulates and decodes the plurality of candidates by using a its own ID and detects the PDCCH addressed to the itself on the basis of a decoding result. That is, the terminal determines that the PDCCH is addressed to the itself if the decoding is performed successfully. Upon detecting the PDCCH, the terminal can obtain the control information required to demodulate and decode the PDSCH and thus demodulates and decodes the PDSCH on the basis of the control information obtained. Note that the position of the PDCCH is not fixed but has a plurality of candidates available, so that the base station can transmit the PDCCH and PDSCH to a plurality of terminals simultaneously, and thus a combination of the plurality of terminals can be freely selected. The plurality of bit sizes available for the PDCCH allows an adjustment of the number of redundant bits used in error correction of the PDCCH in accordance with the communication quality between the base station and the terminal, thereby allowing an effective use of the limited PDCCH region.

In communicating with the terminal, the base station may use a technique that transmits a signal by beamforming in which the base station uses a plurality of antennas to form a beam only in the direction of the terminal with which the base station communicates. This technique narrows down the direction in which a radio signal is transmitted to be able to prevent or reduce interference with another terminal at another location. The signal being transmitted in a specific direction, transmission power can be concentrated more than when the signal is transmitted in not a limited but all directions, which leads to expansion of coverage of a single base station. There is a growing trend to proactively use this beamforming technique in a fifth generation mobile communication system following LTE and LTE-Advanced. With beamforming, the radio signal is transmitted only in a direction where a terminal of communication target exists. Accordingly, in a case where a single base station communicates with terminals T1 and T2, for example, the base station can transmit a signal using the identical frequency-time resources to the terminals T1 and T2 simultaneously if the terminals T1 and T2 are located in different directions with respect to the base station, which leads to an effective use of radio resources. That is, spatial multiplexing can be performed by using a spatial domain to multiplex a plurality of terminals.

Roughly two methods are employed to cover the coverage area of the base station by beamforming. A first method is to cover the coverage area by arranging a plurality of beams, each of which is fixed in direction. In this case, the base station uses an appropriate beam by switching the fixed beams in response to a movement of the terminal. A second method is to emit a beam with a variable direction in the direction of the terminal with which the base station communicates, and to make the beam follow a movement of the terminal.

A system using the first method to switch the beams is required to perform the switching promptly without interrupting communication at the time of beam switching control. As one way to do so, it is considered that the terminal receives a plurality of beams at all times. That is, the terminal receives the plurality of beams to detect a control channel corresponding to the PDCCH in LTE for each beam. In this case, the base station performing transmission can switch the beams instantaneously when a beam switching trigger is generated. However, if the terminal detects the control channel for each of the plurality of beams, processing load of the terminal may increase due to an increased number of attempts to detect the control channel. Note that the terminal uses a reference signal (hereinafter referred to as an RS) whose signal pattern is predetermined if the terminal demodulates a signal. That is, the terminal estimates an impact on a radio channel on a signal according to an impaired state of the RS being received and, on the basis of the estimation, demodulates a signal carrying information on the control channel and the data channel. The terminal uses a different RS prescribed for each of the plurality of beams in the aforementioned operation of receiving the plurality of beams and detecting the control channel.

The load of the terminal in detecting the control channel can be reduced by a method in which the base station does not use the beam at the time of transmitting the control channel and uses only at the time of transmitting the data channel corresponding to the PDSCH. With a frequency band further expanded in the fifth generation mobile communication system, however, one can assume an increase in the number of terminals to which the data channel is transmitted simultaneously. Accordingly, the region for transmitting the control channel may possibly run short if spatial multiplexing by the beam is not performed in the control channel region.

Patent Literature 1 discloses the invention in which an E-PDCCH being a control channel corresponding to the PDCCH is arranged in the PDSCH region, and a beam is used in transmitting the E-PDCCH. According to this invention, a terminal receives the E-PDCCH first in order to demodulate and decode an E-PDSCH that is a data channel corresponding to the PDSCH. Since the beam is used even in transmitting the E-PDCCH, the terminal further receives the PDCCH first in order to demodulate and decode the E-PDCCH. Note that the beam is not used in transmitting the PDCCH. In this method, information required to demodulate and decode the E-PDSCH is transmitted separately in the PDCCH and the E-PDCCH where the E-PDCCH can be subjected to spatial multiplexing by the beam, so that the aforementioned scarcity of the control channel region can be alleviated. Patent Literature 1 also discloses a method of transmitting the control information on a broadcast channel instead of the PDCCH on which the control information has been transmitted. Patent Literature 1 further discloses a method of identifying the spatially multiplexed E-PDCCH without using the PDCCH or the broadcast channel.

### Citation List

### Patent Literature

Patent Literature 1: Japanese Patent Application Laid-Open No. 2013-527663

### Summary

### Technical Problem

According to the invention disclosed in Patent Literature 1, however, the terminal needs to obtain the control information from two kinds of control information carrying channels which are the E-PDCCH and the PDCCH or two kinds of control information carrying channels which are the E-PDCCH and the broadcast channel, and thus has an increased load. In the method of identifying the spatially multiplexed E-PDCCH without using the PDCCH or the broadcast channel, the E-PDCCH is identified by using an RS that is predetermined for each layer. Specifically, the terminal performs reception while changing the RS in turn to determine that a layer, namely a beam, associated with the RS with a high signal-to-noise ratio (SNR) is highly likely to carry the E-PDCCH addressed to itself, and preferentially demodulate and decode the E-PDCCH. In this case, however, the terminal evaluates the SNR for a plurality of layers while changing the RS, and thus has an increased load. Moreover, it is not guaranteed that the demodulation and decoding of the E-PDCCH is completed only one time.

The present invention has been made in view of the aforementioned circumstances, where an object of the invention is to provide a communication device that can effectively use radio resources used for transmitting a control channel while preventing an increase in the load on a reception side in detecting the control channel.

### Solution to Problem

In order to solve the aforementioned problems and achieve the object, an embodiment of the present invention provides a communication device that transmits a signal by using beamforming and includes a transmit signal generation unit, a reference signal generation unit, and a transmission unit. The transmit signal generation unit generates data signals by individually encoding and modulating one or more pieces of data, and generates control signals by individually encoding and modulating control information that is equal in number to the one or more pieces of data and is used in reception processing of the data signals. The reference signal generation unit generates reference signals that are each unique to a corresponding destination and are used in estimating a radio channel for the reception processing of the data signals and the control signals. The transmission unit arranges the data signals in a data channel, and arranges the control signals and the reference signals in a control channel such that signals having the same destination are arranged in the same region.

### Advantageous Effects of Invention

According to an embodiment of the present invention, the radio resources used for transmitting the control channel can be used effectively while preventing an increase in the load on the reception side in detecting the control channel.

### Brief Description of Drawings

FIG. 1 is a diagram illustrating an example of the configuration of a control channel transmitted by a communication device according to a first embodiment.
FIG. 2 is a diagram illustrating the configuration of a subframe used in LTE.
FIG. 3 is a diagram illustrating an example of the configuration of the control channel transmitted by the communication device according to the first embodiment.
FIG. 4 is a diagram illustrating an example of the configuration of a base station that is the communication device according to the first embodiment.
FIG. 5 is a diagram illustrating an example of the configuration of a terminal according to the first embodiment.
FIG. 6 is a flowchart illustrating an example of the operation of a control unit included in the base station according to the first embodiment.
FIG. 7 is a flowchart illustrating an example of the operation of an RS generation unit included in the base station according to the first embodiment.
FIG. 8 is a flowchart illustrating an example of the operation of a direction of arrival estimation unit included in the base station according to the first embodiment.
FIG. 9 is a diagram illustrating an example of a processing circuit that implements the control unit, the RS generation unit, and the direction of arrival estimation unit included in the base station according to the first embodiment.
FIG. 10 is a flowchart illustrating an example of the operation of a control unit included in the terminal according to the first embodiment.
FIG. 11 is a flowchart illustrating an example of the operation of an RS detection unit included in the terminal according to the first embodiment.
FIG. 12 is a diagram illustrating an example of inter-beam interference assumed in a second embodiment.
FIG. 13 is a diagram illustrating an example of the configuration of a base station according to the second embodiment.
FIG. 14 is a diagram illustrating an example of the configuration of a terminal according to the second embodiment.
FIG. 15 is a diagram illustrating an example of the configuration of a subframe used in a third embodiment.
FIG. 16 is a diagram illustrating an example of the arrangement of terminal numbers in a terminal number notification region used in the third embodiment.
FIG. 17 is a diagram illustrating an example of the configuration of a base station according to the third embodiment.
FIG. 18 is a diagram illustrating an example of the configuration of a terminal according to the third embodiment.
FIG. 19 is a diagram illustrating an example of the terminal number notification region used in the third embodiment.
FIG. 20 is a diagram illustrating an example of the configuration of a base station according to a fourth embodiment.
FIG. 21 is a diagram illustrating an example of the configuration of a terminal according to the fourth embodiment.
FIG. 22 is a flowchart illustrating an example of the operation performed at the time of switching beams by the base station according to the fourth embodiment.

### Description of Embodiments

A communication device according to embodiments of the present invention will now be described in detail with reference to the drawings. Note that the present invention is not to be limited to the embodiments. Each embodiment will be described on the assumption that the communication device is a base station or a terminal in a wireless communication system.

### First Embodiment.

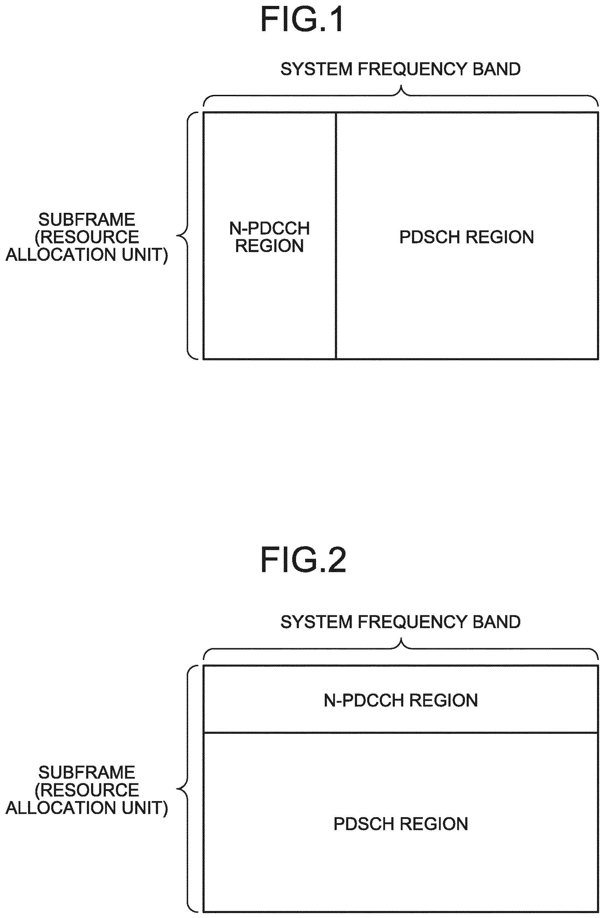

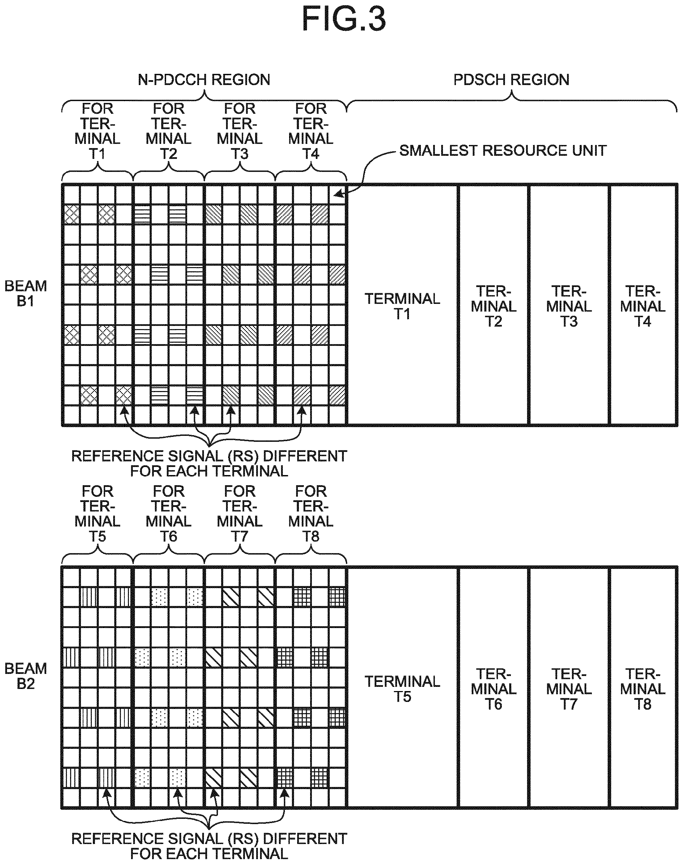

FIGS. 1 and 3 are diagrams each illustrating an example of the configuration of a control channel transmitted by a communication device according to a first embodiment. For convenience of description, the control channel illustrated in FIGS. 1 and 3 will be denoted as an N-PDCCH.

FIG. 1 is a diagram illustrating an overview of an N-PDCCH region and a data channel (PDSCH) region. The N-PDCCH region is a region allocated to transmit a PDCCH being the control channel, and the PDSCH region is a region allocated to transmit a PDSCH being a data channel. As illustrated in FIG. 1, a system frequency band is divided into the N-PDCCH region and the PDSCH region. Note that the division of the channel regions is not limited to this. The channel regions may, for example, be divided into the N-PDCCH region and the data channel (PDSCH) region along a time direction as illustrated in FIG. 2. Note that a subframe illustrated in FIG. 2 is configured in a similar manner to a subframe used in LTE.

FIG. 3 illustrates an example where the N-PDCCH is spatially multiplexed by beams. FIG. 3 illustrates the example where a plurality of terminals shares the N-PDCCH region being the control channel region. That is, terminals T1 to T4 share the N-PDCCH region of a beam B1, and terminals T5 to T8 share the N-PDCCH region of a beam B2. In the present embodiment, as illustrated in FIG. 3, the N-PDCCH region is divided into a plurality of small regions to be used by the plurality of terminals. Each small region is made up of a plurality of smallest resource units. FIG. 3 illustrates the example where each small region is made up of 48 smallest resource units (4 × 12 = 48). Positions for dividing the N-PDCCH region into the plurality of small regions, that is, the boundaries of the plurality of the divided small regions within the N-PDCCH region is assumed to be fixed. A control signal and a reference signal to be transmitted toward a certain terminal are arranged in each small region. It is assumed in the present embodiment that the communication is performed by using different reference signals for the terminals. Note that although the four terminals are allocated to each beam in FIG. 3, the number of terminals allocated is not limited to four terminals. Moreover, although the two beams B1 and B2 are used simultaneously in the description, the number of beams used simultaneously is not limited to two beams.

In the example of FIG. 3, the terminals T1 and T5 use the same resource in the frequency and time domains, namely the same small region divided in accordance with the frequency and time, but the terminals T1 and T5 have different RSs because a terminal-specific RS is used as the reference signal for each terminal. The positions of the RSs are shifted by the granularity of the smallest resource unit which is referred to as a resource element in LTE, for example, and is constructed of components in the frequency and time domains. The positions of the RSs are shifted with the aim of assuring that the RSs do not overlap with each other and reducing the amount of interference therebetween even when signals of the beams B1 and B2 overlap. Note that the positions of the RSs need not be shifted depending on the demodulation and decoding ability of the terminal. That is, the positions of the RSs need not be shifted if the terminal can perform demodulation and decoding with the RSs overlapping. The terminal-specific RS can be generated by a method described in section 6. 10. 3 (UE-specific reference signals) of literature "3GPP TS36. 211 V9. 1. 0", for example. Note that the method described in the literature need not be used if a different RS can be generated for each terminal.

In the example of FIG. 3, the four terminals are allocated to each of the beams B1 and B2. In some cases, however, three or fewer terminals are allocated to each beam. In a case where three or fewer terminals are allocated to each beam, the number of small regions provided for the terminals in the N-PDCCH region can be reduced. In a case where three terminals are allocated to the beam B1 in FIG. 3, for example, the small regions corresponding to the terminals T1 to T3 may be used as the N-PDCCH region, and the region corresponding to the terminal T4 may be used as the PDSCH region. Information on the boundary between the N-PDCCH region and the PDSCH region may be included in the control information located in the small regions corresponding to the terminals in the N-PDCCH region. Note that the size of each small region and the arrangement of the RS in each small region are fixed even when the number of terminals actually allocated (three terminals in the above example) is smaller than the maximum number of small regions (four regions in the example of FIG. 3) that can be arranged simultaneously in the N-PDCCH region of a single beam as a system. Another method is for the system to have a fixed number of small regions arranged in the N-PDCCH region of the single beam. In this case as well, not only the number of small regions but the size of the small region and the arrangement of the RS are fixed. Moreover, any of the small regions may be used when three or fewer terminals are allocated. When two terminals X and Y are to be allocated to the beam B1, for example, the terminal X may be allocated in the region corresponding to the terminal T1 and the terminal Y in the region corresponding to the terminal T3. Alternatively, the terminal X may be allocated in the region corresponding to the terminal T3 and the terminal Y in the region corresponding to the terminal T4. The terminals may be allocated in another way as well. Note that the PDSCH region used to transmit the data channel is dynamically allocated among the terminals on the basis of the amount of data transmitted to the terminals that are allocated to the same beam at the same time.

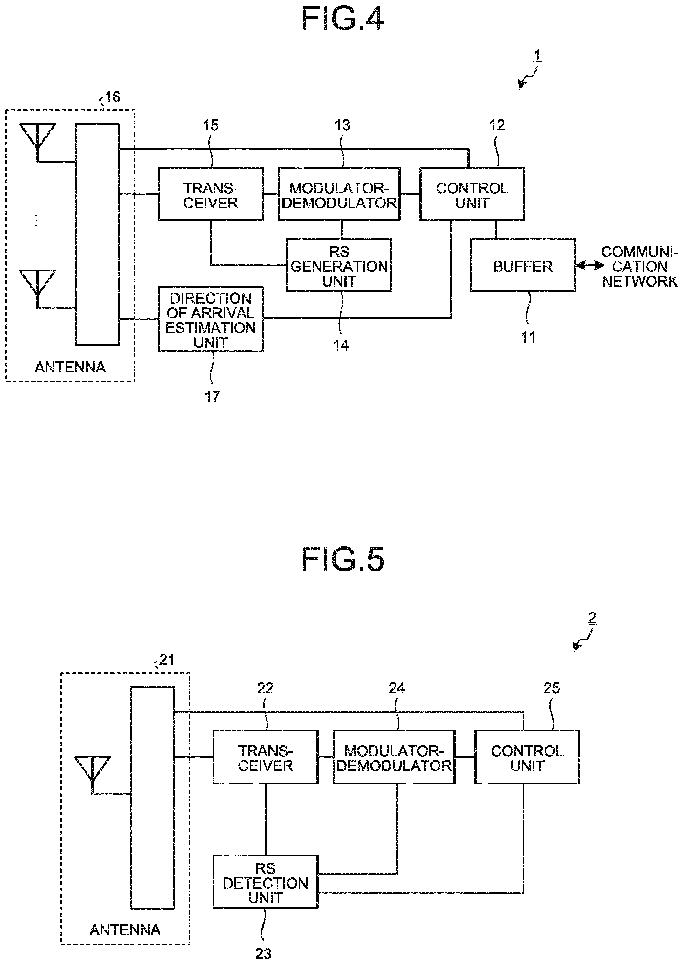

FIG. 4 is a diagram illustrating an example of the configuration of the base station that is the communication device according to the first embodiment. FIG. 5 is a diagram illustrating an example of the configuration of the terminal according to the first embodiment. A base station 1 configured as illustrated in FIG. 4 transmits and receives a signal to and from a terminal 2 configured as illustrated in FIG. 5 by beamforming. The base station 1 can communicate with two or more of the terminals 2 simultaneously. When a plurality of the terminals 2 is arranged in the same direction, the base station 1 can communicate with the plurality of terminals by using a single beam.

The base station 1 includes: a buffer 11 that temporarily stores data transmitted and received to and from a communication network; a control unit 12 that controls an antenna 16 or the like; a modulator-demodulator 13 that encodes and modulates data and associated control information in transmitting data toward the terminal 2, or demodulates and decodes a received signal in receiving data from the terminal 2; an RS generation unit 14 that generates the RS specific to each terminal, to which data is transmitted, in transmitting the data toward the terminal 2; a transceiver 15 that performs digital to analog conversion as well as upconversion on a signal output from the modulator-demodulator 13 and the RS output from the RS generation unit 14 in transmitting the data toward the terminal 2, or performs downconversion as well as analog to digital conversion on the received signal in receiving the data from the terminal 2; the antenna 16 that forms a beam in a direction instructed by the control unit 12 to transmit and receive a radio signal to and from the terminal 2; and a direction of arrival estimation unit 17 that estimates the direction of arrival of a signal transmitted from the terminal 2. The components of the base station 1 illustrated in FIG. 4 may be implemented by hardware or software. The same can be said of a base station in a second embodiment onward. The buffer 11 is implemented by a memory including a random access memory (RAM) and a read only memory (ROM), for example. The control unit 12 is implemented when a processor such as a central processing unit (CPU) executes a program to operate as the control unit 12. The modulator-demodulator 13 is implemented by a processor that performs modulation and demodulation as a modem. The RS generation unit 14 is implemented when a processor executes a program to operate as the RS generation unit 14. The transceiver 15 is implemented by a processor or a dedicated circuit performing frequency conversion and digital to analog signal conversion as a transceiver. The antenna 16 is implemented by a plurality of antennas. The direction of arrival estimation unit 17 is implemented when a processor executes a program to operate as the direction of arrival estimation unit 17. Note that the configuration of a processing circuit used to implement each of the control unit 12, the RS generation unit 14, and the direction of arrival estimation unit 17 will be described later.

The terminal 2 includes: an antenna 21 that transmits and receives a radio signal to and from the base station 1; a transceiver 22 that performs digital to analog conversion as well as upconversion on a signal output from a modulator-demodulator 24 in transmitting data toward the base station 1, or performs downconversion as well as analog to digital conversion on a received signal in receiving data from the base station 1; an RS detection unit 23 that detects an RS specific to the own terminal from among a plurality of kinds of RSs included in the received signal; the modulator-demodulator 24 that encodes and modulates data in transmitting data toward the base station 1, or demodulates and decodes a received signal in receiving data from the base station 1; and a control unit 25 that controls the RS detection unit 23. The components of the terminal 2 illustrated in FIG. 5 may be implemented by hardware or software. The same can be said of a terminal in a second embodiment onward. The antenna 21 is implemented by an antenna, for example. The transceiver 22 is implemented by a processor or a dedicated circuit performing frequency conversion and digital to analog signal conversion as a transceiver. The RS detection unit 23 is implemented when a processor executes a program to operate as the RS detection unit 23. The modulator-demodulator 24 is implemented by a processor that performs modulation and demodulation as a modem. The control unit 25 is implemented when a processor executes a program to operate as the control unit 25.

The operation of a communication system including the base station 1 and one or more of the terminals 2 of the present embodiment will now be described. The communication system of the present embodiment is characterized by the operation in which the base station 1 transmits data toward the terminal 2. Accordingly, the following description describes a data transmission operation of the base station 1 and a data reception operation of the terminal 2, but omits the operation in which the terminal 2 transmits data toward the base station 1.

It is assumed that in the base station 1, the buffer 11 receives and accumulates data to be transmitted to a terminal, the date arriving from the communication network. The control unit 12 holds a terminal ID of each of one or more of the terminals 2 making up the communication system together with the base station 1. The control unit 12 also knows in which direction from each terminal 2 is located, when the terminal is located in an area to be able to communicate with the base station. On the other hand, it is assumed that each terminal 2 knows where in the subframe the N-PDCCH region is arranged as well as how the control information is arranged in the N-PDCCH region. That is, it is assumed that each terminal 2 knows the configuration of the N-PDCCH region illustrated in FIG. 3 and knows that the N-PDCCH region is divided into the maximum of four small regions for use, the small regions being divided in order for the terminal-specific RS and the control signal with the same destination to be arranged together.

When the base station 1 transmits data to the terminal 2, the control unit 12 first checks a status of the data accumulated in the buffer 11 to select a destination of the data, namely the terminal 2 to which the data is transmitted, and at the same time determines the position in the frequency domain and the modulation scheme of the PDSCH to be allocated to the selected terminal 2. A plurality of the terminals 2 is selected as the destinations of the data in some cases. In the present embodiment assuming data transmission using the subframe configured as illustrated in FIG. 3, the maximum number of destinations of the data is four terminals per subframe of a single beam. Note that four terminals are selected as the destinations of the data per subframe of a single beam when four or more of the terminals 2 are located in the same direction with respect to the base station 1. A method for selecting the terminals 2 to which the data is transmitted is not specified in particular. For example, the terminals 2 may be selected in order from one having the largest amount of data accumulated, or selected in accordance with the time of accumulation of the data into the buffer 11. The terminals may also be selected in view of priorities given to the data, for example. The control unit 12 then reads, from the buffer 11, a piece of data to be transmitted on the PDSCH, namely a piece of data to be transmitted to the terminals 2 selected as the destinations of the data, and outputs the data to the modulator-demodulator 13. The control unit 12 at this time notifies the modulator-demodulator 13 of the control information including the terminal ID and information determined for each of the terminals 2 to which the data is transmitted. The information included in the control information and determined for each of the terminals 2 to which the data is transmitted includes the position in the frequency domain of the PDSCH, the modulation scheme and the like.

The modulator-demodulator 13 making up a transmit signal generation unit receives, from the control unit 12, the data and the control information to be transmitted to the terminals 2 to first encode and modulate the data received from the control unit 12 in accordance with the content of the control information received from the control unit 12. Note that when the data is transmitted to the plurality of terminals 2, the data to be transmitted to each of the terminals 2 is encoded and modulated individually. The modulator-demodulator 13 then encodes and modulates the control information received from the control unit 12. In a process of encoding the control information, a process of scrambling the control information with a pattern generated on the basis of the terminal ID of the terminal to which the data is transmitted, a process of generating and adding a cyclic redundancy check (CRC) for error detection on the basis of the terminal ID and the like are performed. The pattern generated on the basis of the terminal ID is a pseudorandom pattern generated by using the terminal ID as a seed. The CRC is generated by dividing the control information by the terminal ID, for example. Note that when the data is transmitted to the plurality of terminals 2, the control information to be transmitted to each of the terminals 2 is encoded and modulated individually. The modulation scheme employed to modulate the control information is fixed and known by each of the terminals 2.

The RS generation unit 14 making up a reference signal generation unit generates a terminal-specific RS, which is an RS unique to each terminal, on the basis of the terminal ID of the terminal to which the data is transmitted. The terminal to which the data is transmitted uses the terminal-specific RS in a process of identifying the control information used to demodulate and decode a data signal and in a process of estimating a state of a radio channel. That is, the terminal to which the data is transmitted identifies the control information transmitted to the own terminal and estimates the state of the radio channel on the basis of the terminal-specific RS. The terminal-specific RS is generated by using the method described in section 6. 10. 3 (UE-specific reference signals) of "3GPP TS36. 211 V9. 1. 0", for example. The terminal-specific RS may also be generated by using another method.

The transceiver 15 making up a control signal arrangement determination unit receives a data signal obtained after the modulator-demodulator 13 encodes and modulates the data to be transmitted to the terminal, a control signal obtained after the modulator-demodulator 13 encodes and modulates the control information, and the terminal-specific RS which is a RS generated by the RS generation unit 14, and then allocates the received signals to the subframe configured as illustrated in FIGS. 1 and 3. Specifically, the transceiver 15 allocates the data signal to the PDSCH region, and allocates the control signal and the terminal-specific RS to the N-PDCCH region. The control signal and the terminal-specific RS are allocated to the same region within the N-PDCCH region. For example, the data signal is allocated to the region for the terminal T1 in the PDSCH region illustrated in FIG. 3, and the control signal and the terminal-specific RS are allocated to the region for the terminal T1 in the N-PDCCH region. When the data is transmitted to a plurality of destinations, the transceiver 15 further allocates the data signal, the control signal, and the terminal-specific RS addressed to another destination to the corresponding regions for the terminal T2, the corresponding regions for the terminal T3, or the corresponding regions for the terminal T4. The transceiver 15 then performs digital to analog conversion on a signal generated by allocating the data signal, the control signal, and the terminal-specific RS to the subframe, and further upconverts the signal to a radio frequency signal.

The antenna 16 is made up of a plurality of antennas with adjustable directivity, for example. The antenna 16 adjusts the directivity of each antenna according to an instruction from the control unit 12, forms a beam in the direction instructed, and transmits the radio signal output from the transceiver 15. The control unit 12 at this time instructs the antenna 16 to form the beam in a direction where the terminal 2 selected as the destination of the data exists. Note that the antenna 16 can also be made up of a plurality of antennas each of which has fixed directivity. In this case, each antenna has different directivity so that the antenna 16 selects and uses an antenna having the directivity aligned with the direction instructed from the control unit 12.

The direction of arrival estimation unit 17 estimates the direction of arrival of a signal transmitted from a terminal being a communication partner, or the direction in which the terminal being the communication partner is located. Upon estimating the direction of arrival, the direction of arrival estimation unit 17 notifies the control unit 12 of a result of estimation. The direction of arrival can be estimated by a number of proposed methods. Chapters 9 to 12 in literature "Adaptive signal processing with array antenna" (KIKUMA, Nobuyoshi, Kagaku Gijutsu Shuppan, Inc.) introduce various methods, for example. There is another method different from the methods proposed in the literature. The direction of arrival estimation unit 17 estimates the direction of arrival by using any of the known methods.

When the control unit 12 receives the result of estimation by the direction of arrival estimation unit 17, the control unit 12 determines whether or not the beam generated by the antenna 16 needs to be adjusted, on the basis of the result of estimation. In other words, the control unit determines whether or not there is a misalignment between the direction of the beam and the direction in which the terminal being the communication partner is located. When the directions are misaligned, the control unit 12 determines that the beam needs to be adjusted and controls the antenna 16 such that the direction of the beam is aligned with the direction in which the terminal being the communication partner is located. Note that even at the time of switching the fixed beam, for example at the time of switching the beam used in transmission to the terminal T1 from the beam B1 to the beam B2, the RS transmitted on the N-PDCCH for the terminal T1 is unchanged.

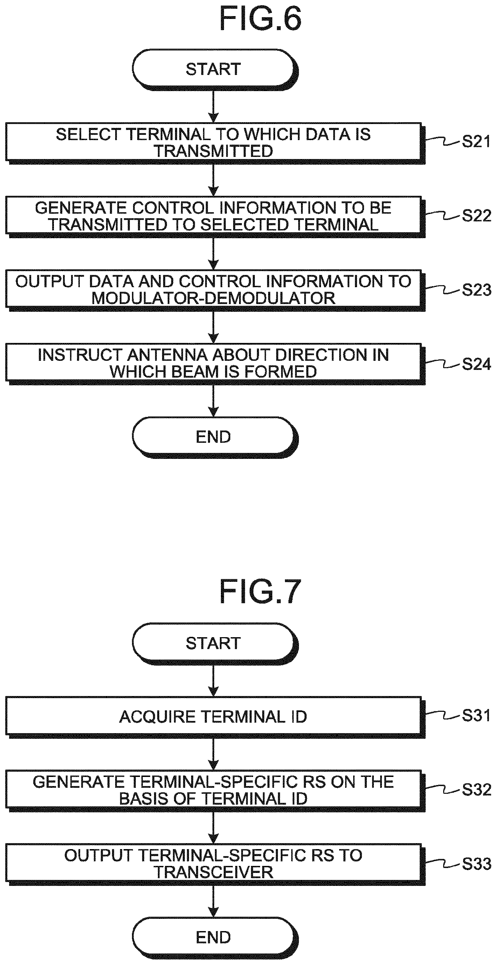

FIG. 6 is a flowchart illustrating the operation of the control unit 12 when the base station 1 transmits data to the terminal 2. The control unit 12 of the base station 1 first selects the terminal 2 to which data is transmitted (step S21), and generates the control information to be transmitted to the selected terminal 2 (step S22). The control unit 12 then outputs, to the modulator-demodulator 13, the data and the control information to be transmitted to the selected terminal 2 (step S23). After that, the control unit 12 instructs the antenna 16 about the direction in which the beam is formed (step S24). Note that in step S24, the control unit 12 may first determine whether or not the direction of the beam formed by the antenna 16 needs to be adjusted and then instruct the antenna about the direction when the adjustment is needed, or may always instruct the antenna about the direction regardless of whether or not the direction of the beam needs to be adjusted.

FIG. 7 is a flowchart illustrating the operation of the RS generation unit 14 when the base station 1 transmits data to the terminal 2. The RS generation unit 14 acquires the terminal ID from the modulator-demodulator 13 (step S31), and generates the terminal-specific RS on the basis of the acquired terminal ID (step S32). The RS generation unit 14 then outputs the generated terminal-specific RS to the transceiver 15 (step S33).

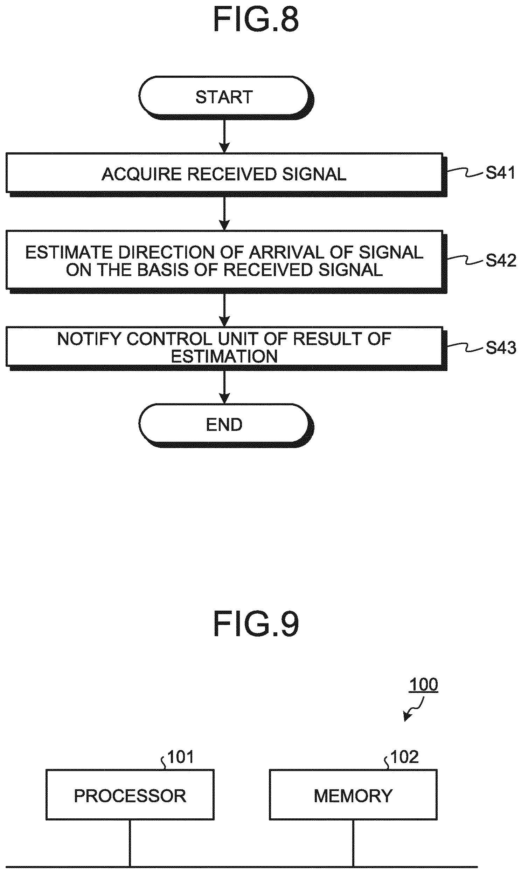

FIG. 8 is a flowchart illustrating the operation of the direction of arrival estimation unit 17 when the base station 1 transmits data to the terminal 2. The direction of arrival estimation unit 17 acquires the received signal from the terminal 2 from the antenna 16 (step S41), and estimates the direction of arrival of the signal transmitted from the terminal 2 on the basis of the received signal which has been acquired (step S42). The direction of arrival estimation unit 17 then notifies the control unit 12 of a result of estimation (step S43).

The control unit 12, the RS generation unit 14, and the direction of arrival estimation unit 17 can each be implemented by a processing circuit 100 illustrated in FIG. 9. The processing circuit 100 includes a processor 101 and a memory 102. The processor 101 can be a central processing unit (CPU), a system large scale integration (LSI) or the like, the CPU being also referred to as a central processor, a processing unit, an arithmetic unit, a microprocessor, a microcomputer, a processor, or a DSP. The memory 102 can be a non-volatile or volatile semiconductor memory such as a RAM, a ROM, a flash memory, an erasable programmable read only memory (EPROM), or an electrically erasable programmable read-only memory (EEPROM), as well as a magnetic disk, a flexible disk, an optical disk, a compact disc, a mini disc, or a digital versatile disc (DVD).

As for the terminal 2 that receives a signal transmitted from the base station 1, the antenna 21 receives a radio signal from the base station 1 and outputs it to the transceiver 22. The transceiver 22 making up a reception unit receives the radio signal from the antenna 21, downconverts the received radio signal, and outputs the signal to the modulator-demodulator 24 and the RS detection unit 23.

The RS detection unit 23 making up a reference signal detection unit detects an RS specific to the own terminal from among a plurality of kinds of RSs included in the received signal from the transceiver 22.

The operation of the RS detection unit 23 will be described in detail. The RS detection unit 23 receives the received signal from the transceiver 22 and extracts the RS included in the received signal. Note that the control unit 25 of the terminal 2 knows where in the signal transmitted from the base station 1 the RS is arranged, namely knows the arrangement of the RS illustrated in FIG. 3, and that the RS detection unit 23 is notified of the arrangement of the RS illustrated in FIG. 3 from the control unit 25. In the example of FIG. 3, it is configured that the maximum of four terminals share the channel, where the N-PDCCH region being the control channel region is divided into the four small regions and different RSs is arranged in the four small regions. The RS detection unit 23 thus extracts four kinds of RSs from the four small regions. The RS detection unit 23 is notified of the terminal ID of the own terminal from the control unit 25, and generates the RS specific to the own terminal on the basis of the terminal ID notified. The RS is generated by the same method as that employed by the RS generation unit 14 of the base station 1. Next, the RS detection unit 23 compares each of the extracted four kinds of RSs with the generated terminal-specific RS to obtain a correlation value therebetween. Among the obtained four correlation values, it is determined that the RS with the maximum correlation value is highly likely to be the RS specific to the own terminal, or the RS generated by the base station 1 on the basis of the terminal ID of the own terminal. The small region including the RS specific to the own terminal also includes the control information used to demodulate and decode the data signal for the own terminal, so that the RS detection unit 23 notifies the modulator-demodulator 24 of the small region in which the RS specific to the own terminal is highly likely to be included, or the small region which includes the RS having the highest correlation with the own terminal-specific RS generated on the basis of the terminal ID of the own terminal.

When the modulator-demodulator 24 making up a demodulation unit is notified of a result of processing from the RS detection unit 23, the modulator-demodulator 24 firstly estimates a state of the radio channel from the base station 1 to the own terminal on the basis of the RS that is included in the small region notified from the RS detection unit 23. The modulator-demodulator 24 then uses a result of estimation of the state of the radio channel to demodulate the control signal included in the small region notified from the RS detection unit 23, and further decodes the signal to recover the control information. In decoding, the terminal performs a CRC check with the own terminal ID and, when the decoding is determined to be successful, determines that information obtained in the end by the decoding is the control information addressed to the own terminal. Once the recovered information is determined to be the control information addressed to the own terminal, the modulator-demodulator 24 demodulates and decodes the data signal in accordance with the recovered control information. Another small region may be demodulated when the CRC check determines that the decoding has failed. That is, the RS detection unit 23 may notify the modulator-demodulator 24 of the small region with the second highest possibility of including the RS specific to the own terminal, and the modulator-demodulator 24 may perform demodulation on the small region being notified.

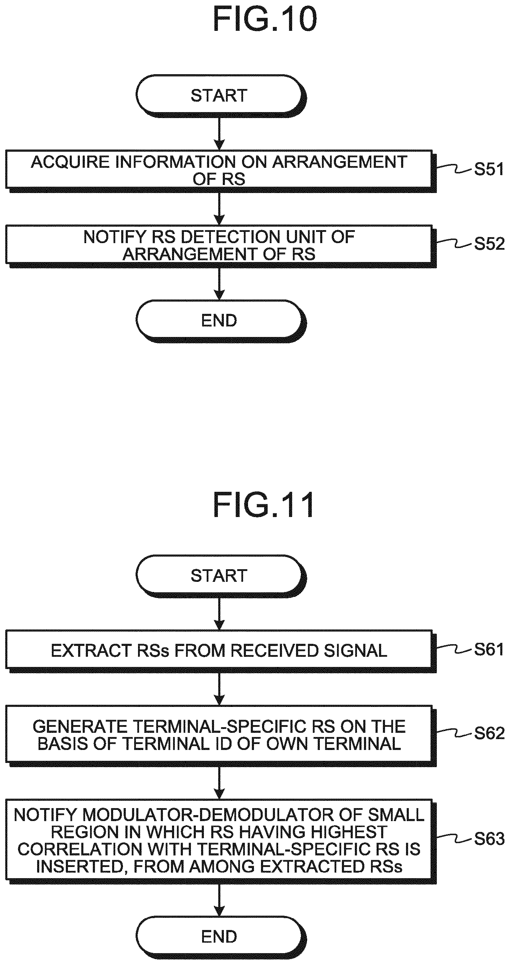

FIG. 10 is a flowchart illustrating the operation of the control unit 25 when the terminal 2 receives data from the base station 1. The control unit 25 acquires information on the arrangement of the RSs from the base station 1 (step S51), and notifies the RS detection unit 23 of the arrangement of the RSs (step S52). The control unit 25 acquires the information on the arrangement of the RSs from the base station 1 at the timing when the terminal 2 is connected to the base station 1, for example. Note that if the arrangement of the RSs is fixed in the entire communication system, namely if the arrangement of the RSs is the same in all base stations making up the communication system, the control unit 25 of the terminal 2 may hold in advance the information on the arrangement of the RSs.

FIG. 11 is a flowchart illustrating the operation of the RS detection unit 23 when the terminal 2 receives data from the base station 1. The RS detection unit 23 extracts the RSs from the received signal (step S61). In step S61, the RS detection unit 23 extracts all the RSs inserted in the received signal. The RS detection unit 23 then generates the terminal-specific RS unique to the own terminal on the basis of the terminal ID of the own terminal (step S62). After that, the RS detection unit 23 compares each of the RSs extracted in step S61 with the terminal-specific RS generated in step S62, and notifies the modulator-demodulator 24 of the small region in which the RS having the highest correlation with the terminal-specific RS is inserted (step S63).

The control unit 25 and the RS detection unit 23 can be implemented by the processing circuit 100 illustrated in FIG. 9.

As has been described in the present embodiment, when the base station 1 transmits data to the terminal 2, the base station 1 generates the terminal-specific RS that is the reference signal specific to the terminal 2 to which the data is transmitted, and arrange the terminal-specific RS and the control information required to demodulate and decode the data signal in the same region within the control channel to transmit the terminal-specific RS and the control information. The terminal 2 generates the terminal-specific RS that is the reference signal specific to the own terminal by the same method as that employed by the base station 1, finds the correlation between the generated terminal-specific RS and the plurality of kinds of RSs included in the received signal, and demodulates and decodes the data signal by using the control information arranged in the same region as the RS having the highest correlation with the terminal-specific RS. This saves the need for the terminal 2 to demodulate each of the plurality of control signals included in the received signal of the plurality of beams and check whether or not the control information addressed to the own terminal is included. In other words, the present embodiment can prevent an increase in the load of the terminal 2 in the operation of detecting the control signal addressed to the own terminal. Moreover, the radio resources for transmitting the control signal can be used effectively. Furthermore, the RS specific to the terminal 2 is used to allow for prompt beam switching as compared to when an RS specific to the beam is used.

### Second Embodiment.

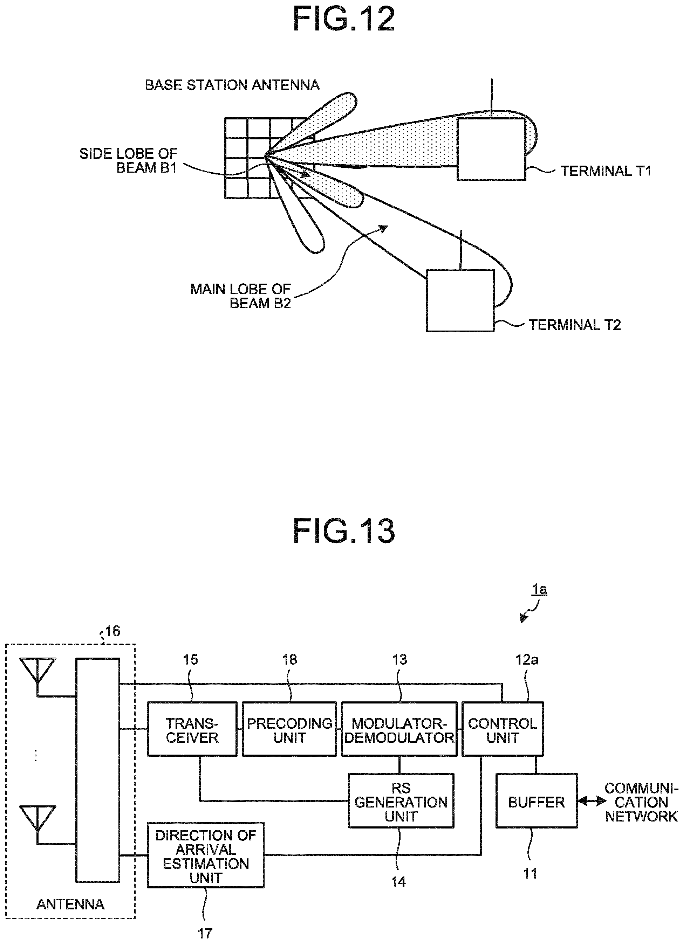

In the first embodiment, the base station 1 configured to transmit a signal only uses the terminal-specific RS in transmitting the N-PDCCH and the PDSCH to each terminal 2. In this case, however, the beams possibly interfere with each other at the time the terminal 2 receives the N-PDCCH signal, in which case the signal may not be received properly. Specifically, the interference occurs when a side lobe of a beam B1 is oriented in the direction of a main lobe of a beam B2 as illustrated in FIG. 12, and can adversely affect the receiving operation. The present embodiment employs precoding as a measure to deal with this problem.

The interference between beams can be prevented by performing precoding on a transmission side in a communication system using beams. In an example illustrated in FIG. 12, precoding at a base station can reduce the side lobe of the beam B1 to thus be able to reduce the amount of interference with the beam B2. Precoding refers to , for example, a processing where the beams B1 and B2 are transmitted in a state that precoding is not performed, it is measured how a signal of the beam B1 effects on a terminal T2 receiving the beam B2, and the base station uses a result of the measurement and cancel in advance the effect of the beam B1 on the beam B2. Note that precoding itself is a known technique and described in detail in Chapter 7 of Part 1 of Group 4 or the like on a web page "Knowledge base" (The Institute of Electronics, Information and Communication Engineers, http://www.ieice-hbkb.org/portal/doc_index.html). A detailed description will thus be omitted.

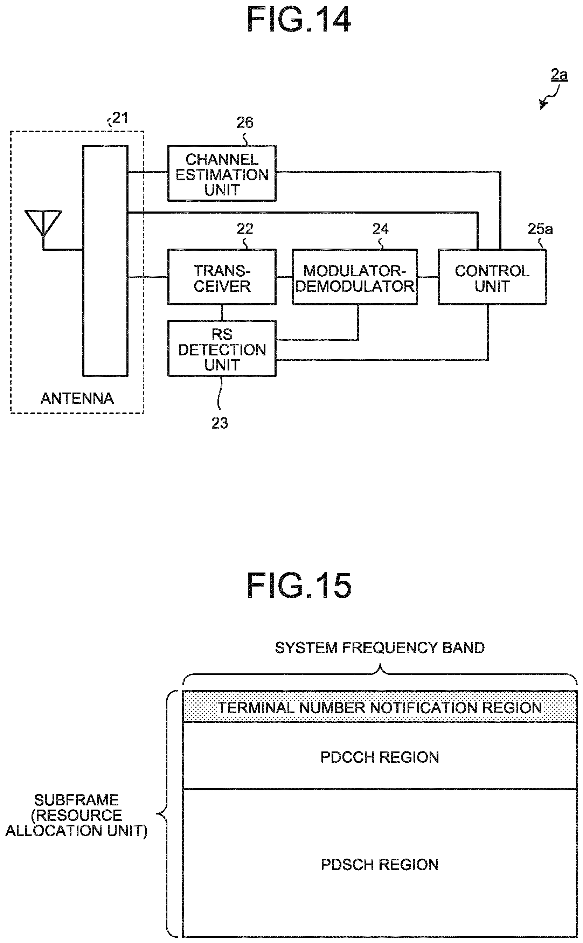

FIG. 13 is a diagram illustrating an example of the configuration of a base station according to a second embodiment, and FIG. 14 is a diagram illustrating an example of the configuration of a terminal according to the second embodiment.

A base station 1a of the present embodiment is different from the base station 1 of the first embodiment illustrated in FIG. 4 in that a precoding unit 18 is added, and that the control unit 12 is replaced with a control unit 12a. A terminal 2a of the present embodiment is different from the terminal 2 of the first embodiment illustrated in FIG. 5 in that a channel estimation unit 26 is added, and that the control unit 25 is replaced with a control unit 25a. The precoding unit 18 is implemented when a processor executes a program to operate as the precoding unit 18, for example. The configuration and operation different from those of the first embodiment will be described in the present embodiment.

The precoding unit 18 of the base station 1a makes up a precoding unit. In transmitting a signal toward the terminal 2a, the precoding unit 18 receives a data signal and a control signal that are generated by a modulator-demodulator 13 encoding and modulating data and control information, and performs precoding on these signals. Specifically, the data signal and the control signal are multiplied by a transmit weight that is calculated on the basis of an estimated channel value indicating a state of a radio channel from the base station 1a to the terminal 2a. The precoding unit 18 outputs a signal obtained by precoding to a transceiver 15. The transmit weight may be calculated by the precoding unit 18 or the control unit 12a. The estimated channel value required to calculate the transmit weight is acquired from the terminal 2a to which data is transmitted. When the precoding unit 18 is to calculate the transmit weight, the control unit 12a extracts the estimated channel value from the signals being output by the modulator-demodulator 13, and passes the estimated channel value being extracted to the precoding unit 18 via the modulator-demodulator 13. Note that the control unit 12a may also pass the estimated channel value directly to the precoding unit 18. When the control unit 12a is to calculate the transmit weight, the control unit 12a calculates the transmit weight by extracting the estimated channel value from the signals being output by the modulator-demodulator 13, and passes the transmit weight being calculated to the precoding unit 18 via the modulator-demodulator 13. Note that the control unit 12a may also pass the transmit weight directly to the precoding unit 18. The precoding unit 18 outputs an output signal from the transceiver 15 as is to the modulator-demodulator 13 in an operation to receive a signal from the terminal 2a.

The channel estimation unit 26 of the terminal 2a estimates the state of the radio channel by receiving a channel estimation signal transmitted from the base station 1a, generates the estimated channel value indicating a result of estimation, and reports it to the control unit 25a. The channel estimation signal may be the terminal-specific RS described in the first embodiment or another signal prepared separately. The control unit 25a transmits the estimated channel value received from the channel estimation unit 26 to the base station 1a via a modulator-demodulator 24, a transceiver 22, and an antenna 21.

The base station 1a of the present embodiment performs precoding on the data signal and the control signal as described above, and thus it is able to reduce the interference between beams and improve the quality of communication.

### Third Embodiment.

In the first and second embodiments, each terminal uses the RS allocated individually to the own terminal to identify the control information that is addressed to the own terminal. In the present embodiment, each terminal uses another method to identify the control information that is addressed to the own terminal as described below.

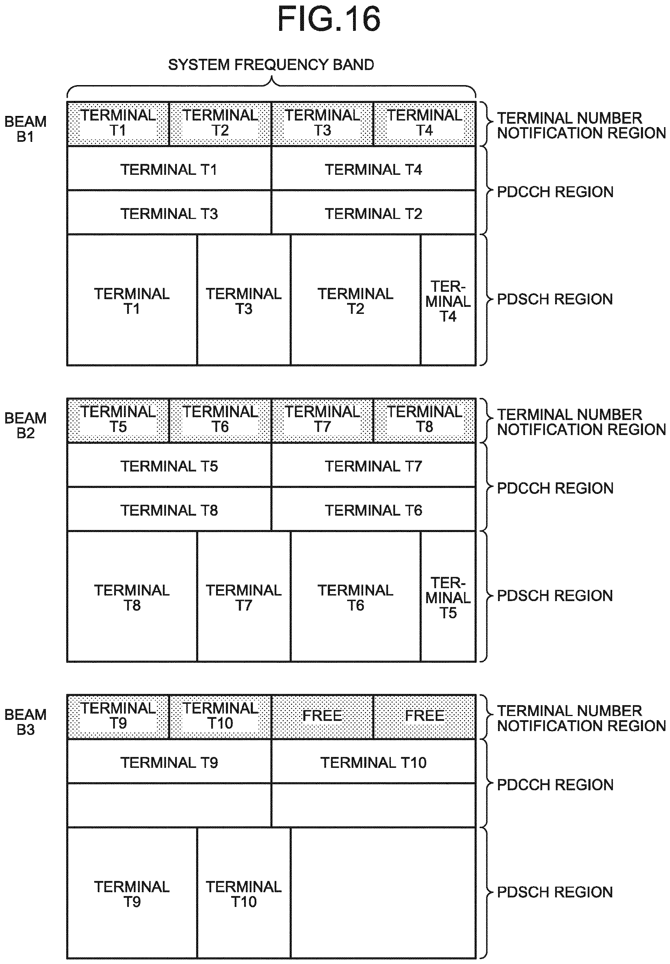

The present embodiment uses a subframe configured as illustrated in FIG. 15. The present embodiment uses the subframe provided with a terminal number notification region to prevent an increase in the load on the data receiving terminal at the time of identifying the control information addressed to the own terminal. The terminal number notification region is provided at the top of the subframe in an example illustrated in FIG. 15, but may also be provided at another location. FIG. 16 illustrates an example of the arrangement of terminal numbers in the terminal number notification region. FIG. 16 illustrates the example where the terminal number notification region and a PDCCH region are each divided into four small regions to allocate the maximum of four terminals to a single subframe. FIG. 16 illustrates a state in which four terminals are allocated to the subframe of each of beams B1 and B2, and two terminals are allocated to the subframe of a beam B3. As for terminals T1 to T4 for which a PDCCH and a PDSCH are allocated to the beam B1, terminal numbers of the terminals are allocated to the terminal number notification region of the beam B1. Likewise, as for terminals T5 to T8 for which a PDCCH and a PDSCH are allocated to the beam B2, terminal numbers of the terminals are allocated to the terminal number notification region of the beam B2. The allocation is performed in a similar manner for the beam B3 as well. Note that only two terminals are allocated to the beam B3, and thus the terminal number notification region and the PDCCH region for the beam are used only partially. This is because the terminal number notification region and the PDCCH region each have a fixed configuration. Note that the terminal number may be any information if it is information indicating uniquely identifying the terminal. Although a part of a PDSCH region for the beam B3 is unused in the example illustrated in FIG. 16, the unused region of the PDSCH region may be allocated to one or both of terminals T9 and T10. It is assumed that the terminal knows in advance the configuration of the subframe. That is, the arrangements of the PDCCH region, the terminal number notification region, and the PDSCH region are known on the side of the terminal to which the signal is transmitted.

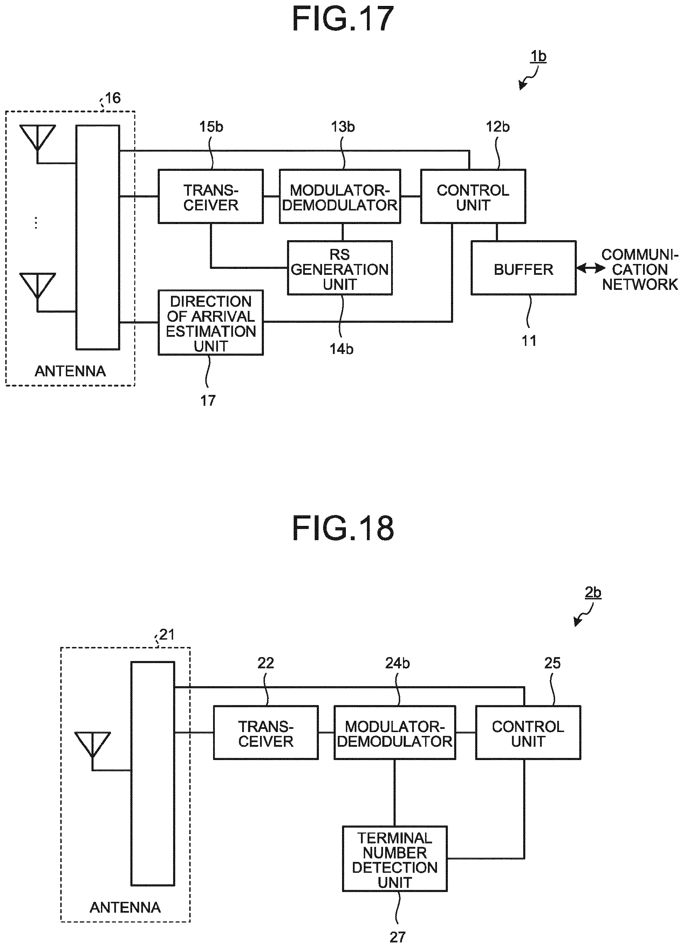

FIG. 17 is a diagram illustrating an example of the configuration of a base station according to a third embodiment, and FIG. 18 is a diagram illustrating an example of the configuration of a terminal according to the third embodiment.

A base station 1b of the present embodiment is configured such that the control unit 12, the modulator-demodulator 13, the RS generation unit 14, and the transceiver 15 of the base station 1 of the first embodiment illustrated in FIG. 4 are replaced with a control unit 12b, a modulator-demodulator 13b, an RS generation unit 14b, and a transceiver 15b, respectively. A terminal 2b of the present embodiment is configured such that the RS detection unit 23 included in the terminal 2 of the first embodiment illustrated in FIG. 5 is removed while at the same time adding a terminal number detection unit 27 and replacing the modulator-demodulator 24 with a modulator-demodulator 24b. The terminal number detection unit 27 is implemented when a processor executes a program to operate as the terminal number detection unit 27, for example. The configuration and operation different from those of the first embodiment will be described in the present embodiment.

As with the control unit 12 described in the first embodiment, the control unit 12b of the base station 1b selects the terminal 2b to which data is transmitted and determines a position in the frequency domain as well as a modulation scheme of a PDSCH to be allocated to the terminal 2b being selected. The control unit 12b further reads data to be transmitted on the PDSCH from a buffer 11 and outputs the data to the modulator-demodulator 13b. At this time, the control unit 12b notifies the modulator-demodulator 13b of control information and a terminal number allocated to a terminal number notification region of a subframe, where the control information includes information such as a position in the frequency domain of a PDCCH and a terminal ID, and the control information as well as the terminal number are determined for each terminal 2b to which data is transmitted. The base station 1b determines the terminal number and notifies the terminal 2b of the terminal number when the terminal 2b is connected to the base station 1b for the first time, for example. Note that the terminal ID may be used as the terminal number if there is no problem with the capacity of information to be transmitted.

The modulator-demodulator 13b receives from the control unit 12b the data, the control information, and the terminal number to be transmitted to the terminal 2b, and encodes and modulates the data first in accordance with the content of the received control information. The modulator-demodulator 13b also encodes and modulates the control information. The modulator-demodulator 13b further encodes and modulates the terminal number that is the information on the destination. A modulation scheme employed to modulate the control information and the terminal number is fixed and known by the terminal 2b.

Unlike the RS generation unit 14 described in the first embodiment, the RS generation unit 14b generates a beam-specific RS that is unique to each beam.

The transceiver 15b receives a data signal that is a signal obtained by the modulator-demodulator 13b to encode and modulate the data to be transmitted to the terminal, a control signal that is a signal obtained by the modulator-demodulator 13b to encode and modulate the control information, a destination information signal that is a signal obtained by the modulator-demodulator 13b to encode and modulate the terminal number, and the beam-specific RS generated by the RS generation unit 14b, and then allocates the received signals to the subframe configured as illustrated in FIGS. 15 and 16. Specifically, the transceiver 15b allocates the data signal to the PDSCH region, the control signal and the terminal-specific RS to the PDCCH region, and the destination information signal to the terminal number notification region. The transceiver 15b then performs digital to analog conversion on a signal generated by allocating the data signal, the control signal, the terminal-specific RS, and the destination information signal to the subframe, and further upconverts the signal to a radio frequency signal.

Note that, as with the control unit 12 of the first embodiment, the control unit 12b receives a result of estimation performed by a direction of arrival estimation unit 17 and determines whether or not the beam generated by an antenna 16 needs to be adjusted, on the basis of the result of estimation. When the direction of the beam and the direction in which the terminal 2b being a communication partner is located are misaligned with each other, the control unit 12b controls the antenna 16 such that the direction of the beam is aligned with the direction in which the terminal 2b being the communication partner is located. In an example where the terminal T1 is the terminal 2b being the communication partner of the base station 1b and where the beam used in transmitting data to the terminal T1 is switched from the beam B1 to the beam B3 upon switching of the fixed beam, the control unit 12b makes a change such that the terminal number of the terminal T1 set to the terminal number notification region of the beam B1 is now set to the terminal number notification region of the beam B3.

When the terminal 2b receives the signal transmitted from the base station 1b, the modulator-demodulator 24b making up a destination information recovery unit and a demodulation unit first estimates condition of radio channels of all of the received beams by using the beam-specific RSs and, on the basis of a result of estimation, demodulates and decodes the terminal number notification regions to recover the terminal numbers. The terminal 2b knows in advance where within the subframe the terminal number notification region is located. The modulator-demodulator 24b notifies the terminal number detection unit 27 of the recovered terminal numbers, and the terminal number detection unit 27 checks whether or not the terminal number of the own terminal is included in the notified terminal numbers. Upon detecting the terminal number of the own terminal, the terminal number detection unit 27 notifies the modulator-demodulator 24b that the terminal number is detected. The modulator-demodulator 24b, which has received the notification, demodulates and decodes the PDCCH region while targeting the signal received by the beam for which the terminal number of the own terminal is detected, and recovers the control information. The modulator-demodulator 24b further demodulates and decodes the PDSCH region by using the control information that is determined to be addressed to the own terminal by a CRC check, from among the recovered control information. Although the terminal number detection unit 27 detects the terminal number of the own terminal in this example, the control unit 25 may, instead, detect the terminal number of the own terminal.

Note that, as has been described in the description of the configuration illustrated in FIG. 16, the size of the terminal number notification region is fixed regardless of the number of terminals to which the PDCCH and the PDSCH are allocated in one subframe. The size is fixed in order to simplify the processing performed by the terminal 2b. The terminal numbers may or may not be subjected to error correction or error detection encoding. When the terminal numbers are to be encoded, single encoding is performed on a range in which all the terminal numbers are put together for each beam.

As described above, the terminal 2b first demodulates and decodes only the terminal number notification region that is a small region for each beam. Then, the PDCCH and the PDSCH are demodulated and decoded for the beam from which the terminal number of the own terminal is detected. This can prevent an increase in the load of the terminal 2b as compared to when the PDCCH regions of all the beams are demodulated and decoded. Moreover, the beams can be switched promptly when needed. Furthermore, the region of the control channel, namely the PDCCH region, is less likely to run short as compared to the method described in Patent Literature 1.

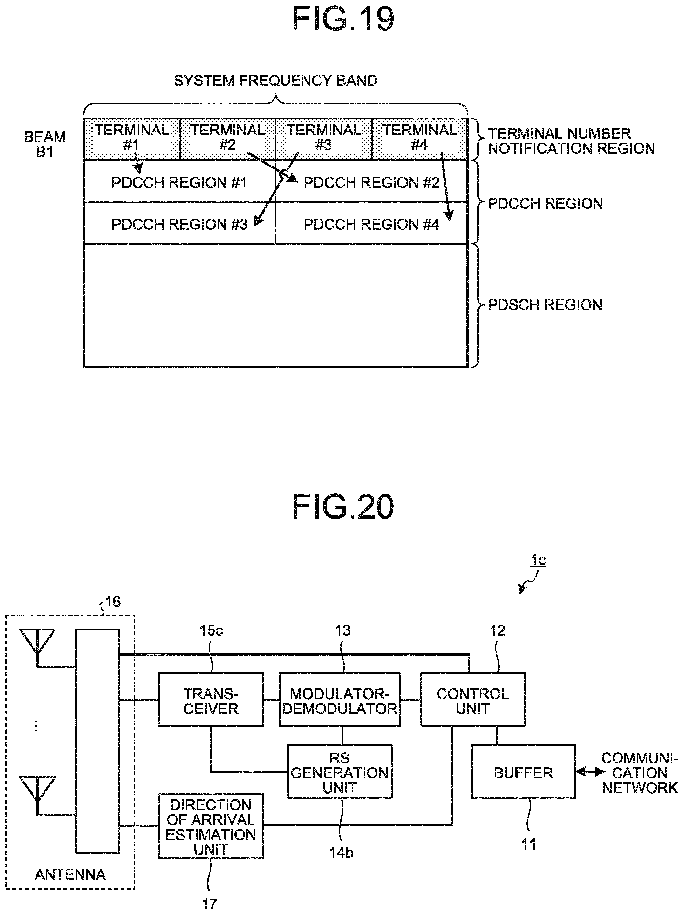

The aforementioned description assumes that the terminal 2b does not know where in the PDCCH region the control information addressed to the own terminal is located at the time of demodulating and decoding the PDCCH. The terminal 2b thus needs to demodulate and decode the entire PDCCH region. However, as illustrated in FIG. 19, terminals #1 to #4, which are first small regions to which the terminal numbers can be allocated, may be associated in advance with PDCCH regions #1 to #4, which are second small regions to which the control information can be allocated, and thus it is able to prevent an increase in the load of the terminal 2b. That is, the increase in the load can be prevented because the terminal 2b need only demodulate and decode the small region (any of the PDCCH regions #1 to #4) associated with the small region (any of the terminals #1 to #4 in FIG. 19) from which the terminal number of the own terminal is detected. In a case where the example of FIG. 19 is applied, the terminal 2b demodulates and decodes the PDCCH region #1 if the terminal number of the own terminal is detected in the region #1. Likewise, the terminal 2b demodulates and decodes the PDCCH region #2 if the terminal number of the own terminal is detected in the region #2. The terminal 2b demodulates and decodes the PDCCH region #3 if the terminal number of the own terminal is detected in the region #3. The terminal 2b demodulates and decodes the PDCCH region #4 if the terminal number of the own terminal is detected in the region #4.

The base station 1b of the present embodiment transmits the data signal and the control signal while adding the terminal number thereto, so that the terminal 2b first demodulates and decodes the region to which the terminal number is allocated and then demodulates and decodes the data signal and the control signal on the beam including the terminal number of the own terminal. This can prevent an increase in the load of the terminal 2b in the operation of detecting the control signal addressed to the own terminal. Moreover, the radio resources for transmitting the control signal can be used effectively.

### Fourth Embodiment.

A fourth embodiment will be described. As with the third embodiment, the present embodiment uses a beam-specific RS that is an RS unique to each beam. The present embodiment also uses a subframe in which the position of a PDCCH region is fixed for each terminal.

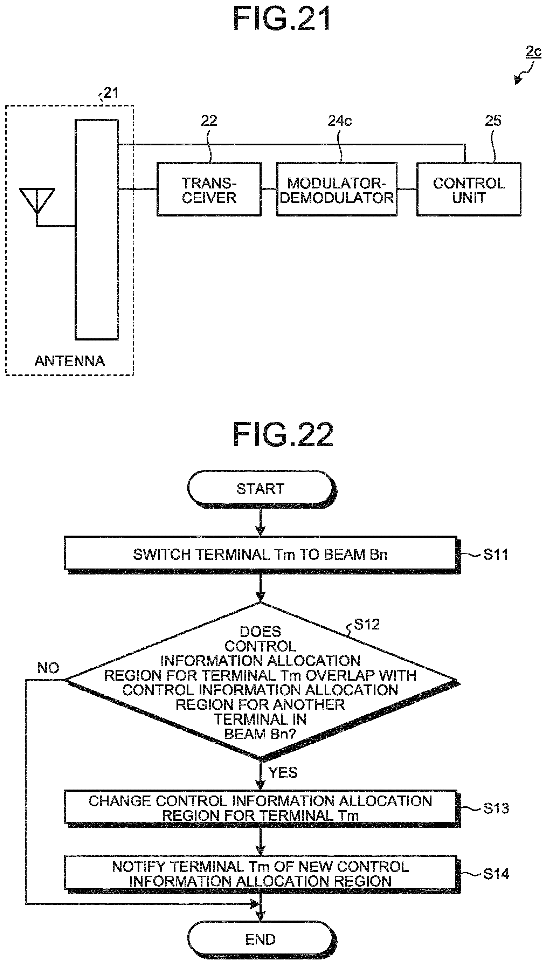

FIG. 20 is a diagram illustrating an example of the configuration of a base station according to the fourth embodiment, and FIG. 21 is a diagram illustrating an example of the configuration of a terminal according to the fourth embodiment.

A base station 1c of the present embodiment is configured such that the control unit 12b, the modulator-demodulator 13b, and the transceiver 15b of the base station 1b of the third embodiment illustrated in FIG. 17 are replaced with a control unit 12, a modulator-demodulator 13, and a transceiver 15c, respectively. The control unit 12 and the modulator-demodulator 13 are similar to the control unit 12 and the modulator-demodulator 13 included in the base station 1 of the first embodiment illustrated in FIG. 4, respectively. A terminal 2c of the present embodiment is configured such that the modulator-demodulator 24b included in the terminal 2b of the third embodiment illustrated in FIG. 18 is replaced with a modulator-demodulator 24c and that the terminal number detection unit 27 is removed. The configuration and operation different from those of the first and third embodiments will be described in the present embodiment.

The present embodiment transmits control information by using a fixed position in the PDCCH region within the subframe for each terminal. Accordingly, the terminal 2c receives all beams but need only demodulate and decode a predetermined position, namely a specific region within the PDCCH region allocated for control information addressed to the own terminal.

The transceiver 15c in the base station 1c of the present embodiment receives a data signal, a control signal, and the beam-specific RS and allocates the received signals in the subframe configured as illustrated in FIG. 2. That is, the signals are allocated to the subframe having a configuration that the terminal number notification region are deleted from the subframe illustrated in FIG. 15. Specifically, the transceiver 15c allocates the data signal to a PDSCH region, and allocates the control signal and the beam-specific RS to the PDCCH region. The control signal is allocated to the specific region that is predetermined for each terminal 2c being a destination of the signal. The base station 1c determines to which region of the PDCCH region the control signal is allocated and notifies the terminal 2c of the specific region at the time the terminal 2c is connected to the base station 1c for the first time, for example.

The modulator-demodulator 24c of the terminal 2c first demodulates and decodes the specific region that is predetermined within the PDCCH region to recover the control information addressed to the own terminal. The modulator-demodulator further demodulates and decodes the PDSCH region by using the control information that is determined to be addressed to the own terminal by a CRC check.

Note that the following problem can occur when beam switching occurs at the base station 1c such as when the beam for a terminal T1 is switched from a beam B1 to a beam B2. That is, the control information addressed to the terminal T1 and the control information addressed to a terminal T2 which has performed communication with use of the beam B2 can be allocated to the same region within the PDCCH region for the beam B2. In this case, the signals cannot be transmitted to the terminal T1 and the terminal T2 at the same timing. As a measure to deal with this problem, the control unit 12 of the base station 1c executes the operation according to a flowchart illustrated in FIG. 22 when beam switching is required. FIG. 22 is a flowchart illustrating an example of the operation executed at the time of beam switching by the base station 1c according to the fourth embodiment.

The control unit 12 making up a control signal arrangement determination unit in the base station 1c first switches the beam of a terminal Tm requiring switching to a beam Bn, when beam switching is required (step S11). Next, the control unit checks whether or not a region to which control information addressed to the terminal Tm is allocated overlaps with a region to which control information addressed to another terminal having performed communication with the beam Bn is allocated (step S12). The control unit 12 ends the operation upon determining as a result of the checking that the regions do not overlap (No in step S12). In this case, the base station 1c allocates the control information addressed to the terminal Tm to the same region as that used before beam switching in subsequent transmission of the control information addressed to the terminal Tm.

The control unit 12 changes the region to which the control information addressed to the terminal Tm is allocated (step S13) when the regions overlap (Yes in step S12). The control unit 12 further notifies the terminal Tm of a new region to which the control information is allocated via the modulator-demodulator 13, the transceiver 15c, and an antenna 16 (step S14).

As described above, the base station 1c of the present embodiment allocates the control information on the specific region within the PDCCH region that is predetermined between the base station and the terminal 2c to transmit the control information. According to the present embodiment, the reception processing can be simplified as compared to when the terminal demodulates and decodes the PDCCH regions of all beams with an undetermined position of the control information addressed to the own terminal. In other words, the terminal 2c of the present embodiment need only demodulate and decode the specific region that is predetermined within the PDCCH region, specifically the specific region determined as the region to which the control information addressed to the own terminal is allocated, and thus it is able to prevent an increase in the load on the terminal. Moreover, the time required for the processing is reduced along with the simplified reception processing, so that beam switching can be performed promptly when the beam switching is required.

The configuration illustrated in the aforementioned embodiments merely illustrates an example of the content of the preset invention, and can thus be combined with another known technique or partially omitted and/or modified without departing from the gist of the present invention.

### Reference Signs List

1, 1a, 1b, 1c base station, 2, 2a, 2b, 2c terminal, 11 buffer, 12, 12a, 12b, 25, 25a control unit, 13, 13b, 24, 24b, 24c modulator-demodulator, 14, 14b RS generation unit, 15, 15b, 15c, 22 transceiver, 16, 21 antenna, 17 direction of arrival estimation unit, 18 precoding unit, 23 RS detection unit, 26 channel estimation unit, 27 terminal number detection unit.

## Claims

1. A communication device for transmitting a signal by using beamforming, the communication device comprising:
a transmit signal generation unit to generate data signals by individually encoding and modulating one or more pieces of data, and to generate control signals by individually encoding and modulating control information that is equal in number to the one or more pieces of data and is used in reception processing of the data signals;
a reference signal generation unit to generate reference signals that are each specific to a corresponding destination, the reference signals being used in estimating a radio channel for the reception processing of the data signals and the control signals; and
a transmission unit to arrange the data signals in a data channel, arrange the control signals and the reference signals in a control channel in a way that signals having the same destination are arranged in the same region, and transmit the signals.

2. The communication device according to claim 1, further comprising:
a precoding unit to precode the data signals and the control signals output from the transmit signal generation unit, wherein
the transmission unit transmits data signals and control signals that are obtained after being precoded by the precoding unit.

3. A communication device for transmitting a signal by using beamforming, the communication device comprising:
a transmit signal generation unit to generate data signals by individually encoding and modulating one or more pieces of data, generate control signals by individually encoding and modulating control information that is equal in number to the one or more pieces of data and is used in reception processing of the data signals, and generate destination information signals by encoding and modulating destination information that is equal in number to the one or more pieces of data and uniquely indicates a destination of each of the data signals and the control signals;
a reference signal generation unit to generate reference signals that are each specific to a corresponding beam and are used in estimating a radio channel for the reception processing of the data signals, the control signals, and the destination information signals; and
a transmission unit to arrange the data signals in a data channel, arrange the control signals and the reference signals in a control channel, arrange the destination information signals in a region known by a reception side, and transmit the signals.

4. The communication device according to claim 3, wherein
the region known by the reception side includes a plurality of first small regions, and
the plurality of first small regions is each associated with any one of a plurality of second small regions of the control channel in which the control channel can be arranged.

5. A communication device for transmitting a signal by using beamforming, the communication device comprising:
a transmit signal generation unit to generate data signals by individually encoding and modulating one or more pieces of data, and to generate control signals by individually encoding and modulating control information that is equal in number to the one or more pieces of data and is used in reception processing of the data signals;
a reference signal generation unit to generate reference signals that are each specific to a corresponding beam and are used in estimating a radio channel for the reception processing of the data signals and the control signals; and
a transmission unit to arrange the data signals in a data channel, arrange the control signals in a specific region known by a reception side within a control channel, arrange the reference signals in the control channel, and transmit the signals.

6. The communication device according to claim 5, comprising a control signal arrangement determination unit to:
operate when the communication device requires switching of a beam used in transmitting the data signals, the control signals, and the reference signals to a specific destination;
check the presence or absence of another control signal that is transmitted by a newly switched beam while being arranged in the same region as a region within the control channel in which the control signal is arranged in transmission using a beam before the switching;
arrange the control signal in the same region as that before the switching of a beam and determine to transmit the control signal by the newly switched beam, when the other control signal is absent;
arrange the control signal in a region different from the region in which the other control channel is arranged and determine to transmit the control signal by the newly switched beam, when the other control signal is present; and
notify the specific destination of a result of the determination.

7. A communication device for receiving signals including:
a data channel in which data signals generated by individually encoding and modulating one or more pieces of data are arranged; and
a control channel in which control signals and reference signals equal in number to the control signals are arranged, the control signals being generated by individually encoding and modulating control information that is used in reception processing of the data signals and is equal in number to the one or more pieces of data, the control channel being associated one-to-one with the reference signals, and the signals received by the communication device being arranged in any one of a plurality of fixed regions provided within the control channel,
the communication device comprising:
a reception unit to receive the data channel and the control channel;
a reference signal detection unit to detect, from among the reference signals included in the control channel received by the reception unit, a reference signal having the highest correlation with a reference signal that is allocated in advance to an own device; and
a demodulation unit to demodulate and decode a control signal arranged in the same fixed region as the reference signal detected by the reference signal detection unit and, when the decoding is performed successfully, demodulate and decode the data signals by using control information being recovered.

8. A communication device for receiving signals including:
a data channel in which data signals generated by individually encoding and modulating one or more pieces of data are arranged;
a control channel in which control signals generated by individually encoding and modulating control information, which is used in reception processing of the data signals and is equal in number to the one or more pieces of data, are arranged; and
destination information signals generated by encoding and modulating destination information that uniquely indicates a destination of each of the data signals and the control signals and is equal in number to the one or more pieces of data,
the communication device comprising:
a reception unit to receive the data channel, the control channel, and the destination information signals;
a destination information recovery unit to recover the destination information by demodulating and decoding the destination information signals received by the reception unit; and
a demodulation unit to demodulate and decode the control signals and the data signals when the destination information recovered by the destination information recovery unit includes information indicating an own device.

9. A communication device for receiving signals including:
a data channel in which data signals generated by individually encoding and modulating one or more pieces of data are arranged; and
a control channel in which control signals generated by individually encoding and modulating control information, which is used in reception processing of the data signals and is equal in number to the one or more pieces of data, are arranged,
the communication device comprising:
a reception unit to receive the data channel and the control channel; and
a demodulation unit to demodulate and decode a control signal, from among the control signals included in the control channel received by the reception unit, which is arranged in a specific region within the control channel notified in advance from a source communication device and, when the decoding is performed successfully, demodulate and decode the data signals by using control information being recovered.
